(19) Europäisches Patentamt / European Patent Office / Office européen des brevets

(11) **EP 4 606 569 A1**

(12) **EUROPEAN PATENT APPLICATION**
published in accordance with Art. 153(4) EPC

(43) Date of publication:
**27.08.2025 Bulletin 2025/35**

(21) Application number: **23879871.4**

(22) Date of filing: **19.10.2023**

(51) International Patent Classification (IPC):
**B32B 27/28** *(2006.01)* **B65D 65/40** *(2006.01)*

(52) Cooperative Patent Classification (CPC):
**B32B 27/28; B65D 65/40**

(86) International application number:
**PCT/JP2023/037870**

(87) International publication number:
**WO 2024/085228 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.10.2022 JP 2022169069**

(71) Applicant: **Kuraray Co., Ltd.**
**Kurashiki-shi, Okayama 710-0801 (JP)**

(72) Inventors:
- **MURAMOTO Takuya**
  **Kurashiki-shi, Okayama 713-8550 (JP)**
- **NONAKA Yasuhiro**
  **Osaka-shi, Osaka 530-8611 (JP)**
- **SAKANO Takeshi**
  **Kurashiki-shi, Okayama 713-8550 (JP)**
- **NAKAYA Masakazu**
  **Tokyo 100-0004 (JP)**

(74) Representative: **Müller-Boré & Partner**
**Patentanwälte PartG mbB**
**Friedenheimer Brücke 21**
**80639 München (DE)**

(54) **MULTILAYER FILM, PACKAGING MATERIAL, AND REACTION APPARATUS**

(57)     Provided is a multilayer film being favorable in gas barrier properties and bending resistance, and having appropriate flexibility; and a packaging material and a reaction apparatus including such a multilayer film. The multilayer film includes: at least one layer (A) containing an EVOH as a principal component; and at least one layer (B) containing, as a principal component, a thermoplastic resin other than the EVOH. A proportion of a total thickness of the at least one layer (A) and the at least one layer (B) to a total thickness of all layers is 90% or more. The multilayer film satisfies the following inequality (1) and the like.

$$0.0006 \leq \frac{LA}{LB} \cdot \frac{1}{Et} \leq 0.003 \quad \cdots (1)$$

In the inequality (1): LA represents a total thickness of the at least one layer (A); LB represents a total thickness of the at least one layer (B); and Et represents an ethylene unit content (mol%) in the EVOH.

**Description**

[TECHNICAL FIELD]

The present invention relates to a multilayer film, a packaging material, and a reaction apparatus.

[Background Art]

Ethylene-vinyl alcohol copolymers (hereinafter, an "ethylene-vinyl alcohol copolymer" may be abbreviated to "EVOH") are polymer materials that are superior in gas barrier properties against oxygen and the like, oil resistance, antistatic properties, mechanical strength, melt moldability, and the like. Thus, the EVOHs are widely used as molding materials for films, containers, pipes, and the like.
The EVOH originally has low bending resistance. Thus, in flexible containers and the like, a multilayer film obtained by laminating a layer of an EVOH to a layer of a thermoplastic resin having high bending resistance may be used (see Patent Document 1). Furthermore, as one of containers requiring gas barrier properties, a container of a bioreactor has been known. For example, if culture in a bioreactor is contaminated with oxygen from the outside of the system, the culture may be influenced. Therefore, an EVOH may be used as a material for a container of a bioreactor (see Patent Document 2).

[Prior Art Documents]

[Patent Documents]

Patent Document 1: Japanese Unexamined Patent Application, Publication No. 2006-272569

Patent Document 2: Japanese Unexamined Patent Application, Publication No. 2018-161145

[SUMMARY OF THE INVENTION]

[Problems to Be Solved by the Invention]

In a reaction apparatus such as a bioreactor, a stirring blade is typically provided in its container for the purpose of, e.g., enhancing the homogeneity of the reaction.
However, in a case of a reaction apparatus provided with a stirring blade in its flexible container, the container may deform during the stirring, and thus, a pinhole may be generated through the inner surface of the container, and may influence the gas barrier properties. Therefore, it is desirable that the container of the reaction apparatus has, in addition to gas barrier properties, high bending resistance and appropriate flexibility. In cases in which the flexibility is too high, deformation is likely to occur, and thus, a pinhole may be generated even when the bending resistance is high. On the other hand, in cases in which the flexibility is too low (i.e., in cases of being too hard), the handleability tends to deteriorate. Furthermore, in intended usages other than the container of the reaction apparatus, development of a multilayer film having gas barrier properties, bending resistance, and appropriate flexibility is also being expected.
The present invention was made in view of the foregoing circumstances, and it is an object of the present invention to provide: a multilayer film being favorable in gas barrier properties and bending resistance, and having appropriate flexibility; and a packaging material and a reaction apparatus including such a multilayer film.

[Means for Solving the Problems]

The above-described object is achieved by providing the following:

(1) A multilayer film including:

at least one layer (A) containing an ethylene-vinyl alcohol copolymer as a principal component; and
at least one layer (B) containing, as a principal component, a thermoplastic resin other than the ethylene-vinyl alcohol copolymer, wherein
a proportion of a total thickness of the at least one layer (A) and the at least one layer (B) to a total thickness of all layers is 90% or more, and

the multilayer film satisfies the following inequalities (1) to (3):

$$0.0006 \leq \frac{LA}{LB} \cdot \frac{1}{Et} \leq 0.003 \quad \cdots (1)$$

$$EA \geq 6.0 \quad \cdots (2)$$

$$2 \leq \frac{EA}{EB} \leq 40 \quad \cdots (3)$$

wherein, in the inequalities (1) to (3): LA represents a total thickness of the at least one layer (A); LB represents a total thickness of the at least one layer (B); Et represents an ethylene unit content (mol%) in the ethylene-vinyl alcohol copolymer; EA represents an average composite elastic modulus (GPa) of the at least one layer (A); and EB represents an average composite elastic modulus (GPa) of the at least one layer (B);

(2) The multilayer film according to (1), wherein the at least one layer (B) includes a layer (B1) placed as one surface layer, and a layer (B2) placed as another surface layer;
(3) The multilayer film according to (2), wherein

a thermoplastic resin as a principal component of the layer (B1) has a melting point that is lower than a melting point of a thermoplastic resin as a principal component of the layer (B2), and
the layer (B1) has a thickness larger than that of the layer (B2);

(4) The multilayer film according to any one of (1) to (3), wherein the thermoplastic resin is a polyolefin resin;
(5) The multilayer film according to any one of (1) to (3), wherein the thermoplastic resin is a polyethylene resin;
(6) The multilayer film according to any one of (1) to (5), wherein

the total thickness of the at least one layer (A) is 5 $\mu$m or more and less than 50 $\mu$m, and
a proportion of the total thickness of the at least one layer (A) to the total thickness of all the layers is less than 10%;

(7) The multilayer film according to any one of (1) to (6), wherein an oxygen transmission rate (under a condition involving 20°C and 65% RH), measured in accordance with a method disclosed in JIS K 7126-2 (equal-pressure method; 2006), is 1.5 cc/(m$^2$·day·atm) or less;
(8) The multilayer film according to any one of (1) to (7), wherein

the ethylene unit content of the ethylene-vinyl alcohol copolymer is 18 mol% or more and less than 25 mol%, and
a degree of saponification of the ethylene-vinyl alcohol copolymer is 90 mol% or more;

(9) The multilayer film according to any one of (1) to (7), wherein

the ethylene unit content of the ethylene-vinyl alcohol copolymer is 18 mol% or more and 32 mol% or less, and
the at least one layer (A) is at least uniaxially stretched;

(10) The multilayer film according to any one of (1) to (9), consisting of the at least one layer (A) and the at least one layer (B);
(11) A packaging material including the multilayer film according to any one of (1) to (10);
(12) A reaction apparatus including:

a container made from the multilayer film according to any one of (1) to (10); and
a stirring blade placed inside the container.

[Effects of the Invention]

The present invention can provide: a multilayer film being favorable in gas barrier properties and bending resistance, and having appropriate flexibility; and a packaging material and a reaction apparatus including such a multilayer film.

[Description of Embodiments]

Multilayer Film

A multilayer film of the present invention includes at least one layer (A) containing an ethylene-vinyl alcohol copolymer (EVOH) as a principal component, and at least one layer (B) containing, as a principal component, a thermoplastic resin other than the EVOH. A proportion of a total thickness of the at least one layer (A) and the at least one layer (B) to a total thickness of all layers is 90% or more. The multilayer film satisfies the following inequalities (1) to (3).

$$0.0006 \leqq \frac{LA}{LB} \cdot \frac{1}{Et} \leqq 0.003 \quad \cdots (1)$$

$$EA \geqq 6.0 \quad \cdots (2)$$

$$2 \leqq \frac{EA}{EB} \leqq 40 \quad \cdots (3)$$

In the inequalities (1) to (3): LA represents a total thickness of the at least one layer (A); LB represents a total thickness of the at least one layer (B); Et represents an ethylene unit content (mol%) in the EVOH; EA represents an average composite elastic modulus (GPa) of the at least one layer (A); and EB represents an average composite elastic modulus (GPa) of the at least one layer (B).

The multilayer film of the present invention is favorable in gas barrier properties and bending resistance, and has appropriate flexibility. Although not necessarily clarified, the following reason is presumed. Regarding the inequality (1), when the total thickness (LA) of the layer (A) is relatively large, the gas barrier properties improve but the bending resistance and the flexibility deteriorate. By contrast, when the total thickness (LB) of the layer (B) is relatively large, the bending resistance and the flexibility improve but the gas barrier properties deteriorate. Furthermore, when an EVOH having a low ethylene content (Et) is used, the gas barrier properties improve but the bending resistance and the flexibility deteriorate. Therefore, in the case in which the product (LA/LB·1/Et) of LA/LB by 1/Et falls within the predetermined range, the gas barrier properties, the bending resistance, and the flexibility are optimized in a well balanced manner. Furthermore, regarding the inequality (2), owing to the average composite elastic modulus (EA) of the layer (A) being high, the multilayer film has favorable gas barrier properties. The reason for this feature is that an EVOH that has a low ethylene content (Et) or an EVOH that has a high stretch ratio has a high composite elastic modulus (EA), and such an EVOH has high gas barrier properties. Furthermore, due to the average composite elastic modulus (EA) of the layer (A) being high, the multilayer film also has sufficient hardness (the flexibility not being too low). In addition, regarding the inequality (3), because the ratio of the average composite elastic modulus (EA) of the layer (A) to the average composite elastic modulus (EB) of the layer (B) falls within the predetermined range, and thus, the elasticity of the layer (B) falls within an appropriate range, the multilayer film has favorable bending resistance and appropriate flexibility. It is inferred that due to these features, the multilayer film is favorable in gas barrier properties and bending resistance, and has appropriate flexibility.

Regarding the inequality (1), the lower limit of LA/LB ·1/Et is preferably 0.0008, more preferably 0.0011, and still more preferably 0.0015. When LA/LB·1/Et is more than or equal to the lower limit, the gas barrier properties of the multilayer film of the present invention can be more improved, and the flexibility thereof can be made more appropriate. On the other hand, the upper limit of LA/LB·1/Et is preferably 0.0028, more preferably 0.0024, and still more preferably 0.0020. When LA/LB·1/Et is less than or equal to the upper limit, the bending resistance of the multilayer film can be enhanced, and the flexibility thereof can be made more appropriate.

Regarding the inequality (2), the lower limit of EA is preferably 6.2, more preferably 6.4, and still more preferably 6.5. When EA is more than or equal to the lower limit, the gas barrier properties of the multilayer film of the present invention can be more improved, and the hardness thereof can be also made more sufficient. On the other hand, the upper limit of EA is preferably 10.0, more preferably 9.0, still more preferably 8.0, and yet more preferably 7.0. When EA is less than or equal to the upper limit, the bending resistance of the multilayer film can be more enhanced, and the flexibility thereof can be made more appropriate. EA, i.e., the average composite elastic modulus of the at least one layer (A), becomes a higher value due to, e.g., using an EVOH having a low ethylene unit content, stretching the layer (A), or the like.

Regarding the inequality (3), the lower limit of EA/EB is preferably 8, more preferably 15, and still more preferably 20. The upper limit of EA/EB is preferably 36, more preferably 31, and still more preferably 28. When EA/EB falls within this range, the flexibility of the multilayer film of the present invention may be more appropriate, and the bending resistance thereof may also be more enhanced. Furthermore, the lower limit of EB is preferably 0.10, and more preferably 0.20. The upper limit of EB is preferably 2.0, more preferably 1.0, and still more preferably 0.4. When EB falls within the range, the flexibility of the multilayer film may be more appropriate. EB, i.e., the average composite elastic modulus of the at least one layer (B), can be adjusted with, e.g., the type of the thermoplastic resin that forms the layer (B).

It is to be noted that as referred to herein, the "principal component" means a component that has the largest content on mass basis.

Furthermore, as referred to herein, the term "thickness" of the layer, etc. means an average (average thickness) of values measured at any five places.

Furthermore, the average composite elastic modulus as referred to herein means a thickness-base average (weighted average) of respective measured composite elastic moduli of the layers. The composite elastic modulus of each layer is a value measured by the following procedure.

A sample (a multilayer film to be measured) is dried at a temperature of 90 °C for 1 hr, and further vacuum-dried at a temperature of 50 °C in a vacuum drier for 60 hrs. Then, the moisture level of the sample is adjusted by leaving the sample to stand for 1 week in a desiccator, in which the temperature is regulated to 23 °C and the humidity is regulated to 40% RH. The sample is cut into a size of 2 mm by 2 mm, and the cut sample is used for the measurement. A plurality of the cut samples are prepared. Furthermore, a cross section of each layer to be measured is exposed, and the central portion of the cross section of each layer is measured a plurality of times at different points, respectively. The composite elastic modulus is measured by nanoindentation. The measurement conditions are under a temperature of 23 °C and a humidity of 40% RH. As the indenter, a Berkovich indenter is used. A load-displacement curve is obtained in settings in which the set load is a value falling within a range of 50 to 300 $\mu$N, it takes 3 seconds to push in the indenter, and it takes 3 seconds to pull out the indenter. It is to be noted that the set load is set for each layer to be measured, within a range of 50 to 300 $\mu$N, so that the insertion depth becomes approximately 200 nm. The composite elastic modulus E (GPa) is calculated by the following equality (4) from the decrease rate S (N) of the load relative to the displacement at the time of unloading after the maximum load is reached in the load-displacement curve (dP/dh: P represents the load; h represents the displacement), and a contact projection area A (mm$^2$).

$$E = S\sqrt{\pi}/2\sqrt{A} \quad (4)$$

For each cut sample, measurements are conducted at five to ten points, and the average thereof is calculated. Further, two or more and four or less samples are subjected to a similar measurement, and the average of the measurements is used as the composite elastic modulus of the layer. The nanoindentation is performed for each layer having a thickness being more than 1% of the total thickness of all the layers.

Hereinafter, each layer and the like of the multilayer film according to an embodiment of the present invention will be described in detail.

Layer (A)

The layer (A) is a layer containing the EVOH as a principal component. The EVOH is a copolymer containing an ethylene unit and a vinyl alcohol unit. The EVOH is typically obtained by saponification of an ethylene-vinyl ester copolymer. The EVOH may contain a remaining vinyl ester unit. The production and saponification of the ethylene-vinyl ester copolymer can be performed by a well-known procedure. Examples of the vinyl ester include vinyl acetate, vinyl formate, vinyl propionate, vinyl valerate, vinyl caprate, vinyl laurate, vinyl stearate, vinyl pivalate, vinyl versatate, and other aliphatic carboxylic acid vinyl esters, and the like; and vinyl acetate is preferred.

The ethylene unit content (Et) of the EVOH may be, e.g., 15 mol% or more and 35 mol% or less, but is preferably 18 mol% or more and 32 mol% or less, more preferably 18 mol% or more and less than 25 mol%, still more preferably 20 mol% or more and less than 25 mol%, and particularly preferably 22 mol% or more and less than 25 mol%. When the ethylene content (Et) of the EVOH is less than or equal to the upper limit, the gas barrier properties of the multilayer film of the present invention can be improved, and more appropriate flexibility (sufficient hardness) can be provided. On the other hand, when the ethylene unit content (Et) of the EVOH is more than or equal to the lower limit, the bending resistance and the flexibility of the multilayer film can be enhanced. The ethylene unit content of the EVOH as referred to means the content of the ethylene unit with respect to total structural units that constitute the EVOH. In cases in which a plurality of types of the EVOHs are used, the ethylene unit content (Et) is an average on mass basis.

The degree of saponification of the EVOH is preferably 90 mol% or more, more preferably 95 mol% or more, and still more preferably 99 mol% or more. When the degree of saponification of the EVOH is more than or equal to the lower limit, the gas barrier properties and the like of the multilayer film of the present invention tend to be more favorable. The degree of saponification of the EVOH may be 100 mol% or less, 99.97 mol% or less, or 99.94 mol% or less.

The EVOH may have, within a range not leading to impairment of the object of the present invention, other structural unit(s) aside from the ethylene unit, the vinyl alcohol unit, and the vinyl ester unit. In the case in which the EVOH has the other structural unit(s), the content of the other structural unit(s) with respect to total structural units of the EVOH is preferably 30 mol% or less, more preferably 20 mol% or less, still more preferably 10 mol% or less, yet more preferably 5 mol% or less, and may be particularly preferably 1 mol% or less. Furthermore, in the case in which the EVOH has the other structural unit(s), the content may be 0.05 mol% or more, or 0.10 mol% or more. Examples of the other structural unit(s) include structural units derived from: unsaturated carboxylic acids such as acrylic acid, methacrylic acid, crotonic acid, and itaconic acid, as well as anhydrides, salts, and esters thereof; nitriles such as acrylonitrile and methacrylonitrile; amides such as acrylamide and methacrylamide; olefin sulfonic acids such as vinylsulfonic acid, allylsulfonic acid, and methallylsulfonic acid, and salts thereof; vinylsilane compounds such as vinyltrimethoxysilane, vinyltriethoxysilane, vinyltri($\beta$-methoxy-ethoxy)silane, and $\gamma$-methacryloxypropylmethoxysilane; alkyl vinyl ethers; vinyl ketone; N-vinylpyrrolidone; vinyl chloride; vinylidene chloride; and the like.

The EVOH may be used alone of one type, or in a combination of two or more types. For example, the layer (A) as one layer may contain two or more types of the EVOH. Furthermore, in the case in which two or more layers of the layer (A) are present, the layers (A) may contain different EVOHs, respectively. In light of the gas barrier properties and the like, the content of the EVOH in the layer (A) is preferably 70% by mass or more, more preferably 80% by mass or more, and particularly preferably 90% by mass or more, and may be 95% by mass or more, 99% by mass or more, or 99.9% by mass or more. The resin that constitutes the layer (A) may be substantially constituted by only the EVOH(s). On the other hand, the content of the EVOH in the layer (A) may be, e.g., 99.9% by mass or less, or 99% by mass or less.

The layer (A) may contain, as an optional component other than the EVOH: a boron compound; one of carboxylic acids; a phosphorous compound; a metal ion; an antioxidant; an ultraviolet ray-absorbing agent; a plasticizer; an antistatic agent; a lubricant; a colorant; a filler; a thermal stabilizer; a resin other than the EVOH; a metal salt of a higher aliphatic carboxylic acid; and the like. The layer (A) may contain two or more types of these optional components.

Examples of the boron compound include: boric acids such as orthoboric acid, metaboric acid, and tetraboric acid; boric acid esters such as triethyl borate and trimethyl borate; boric acid salts such as alkali metal salts and alkaline earth metal salts of the above boric acids, and borax; boron hydrides; and the like. The lower limit of the content of the boron compound in the layer (A) is preferably 100 ppm, and more preferably 500 ppm. Furthermore, the upper limit of the content of the boron compound in the layer (A) is preferably 5,000 ppm, more preferably 3,000 ppm, and still more preferably 1,000 ppm. When the content of the boron compound is more than or equal to the lower limit, the torque variation of the extrusion molding machine or the like can be sufficiently prevented. On the other hand, when the content of the boron compound is less than or equal to the upper limit, gelation is less likely to occur during melt molding, and the appearance of the multilayer film of the present invention can be improved. It is to be noted that the content of the boron compound is the content of the boron compound in terms of orthoboric acid.

Examples of the carboxylic acids include: formic acid, acetic acid, propionic acid, butyric acid, and lactic acid, and salts thereof; and the like. As the carboxylic acids, carboxylic acids having four or less carbon atoms, or saturated carboxylic acids are preferred, and acetic acids are more preferred. Examples of the acetic acids include acetic acid and salts thereof. The lower limit of the content of the carboxylic acids in the layer (A) is preferably 50 ppm, more preferably 100 ppm, and still more preferably 150 ppm. Furthermore, the upper limit of the content of the carboxylic acids in the layer (A) is preferably 1,000 ppm, more preferably 500 ppm, and still more preferably 400 ppm. When the content of the carboxylic acids is more than or equal to the lower limit, a sufficient coloring inhibition effect can be obtained, and occurrence of yellowing can be sufficiently inhibited. On the other hand, when the content of the carboxylic acids is less than or equal to the upper limit, gelation is less likely to occur during melt molding, especially during melt molding for a long time period, and the multilayer film of the present invention has favorable appearance.

Examples of the phosphorous compound include; phosphoric acid salts of phosphoric acid, phosphorous acid, or the like; and the like. The phosphoric acid salts may be in any form of phosphate monobasic, phosphate dibasic, and phosphate tribasic. Furthermore, cation species of the phosphoric acid salts are not particularly limited, but alkali metal salts and alkaline earth metal salts are preferred. Of these, sodium dihydrogen phosphate, potassium dihydrogen phosphate, disodium hydrogen phosphate, or dipotassium hydrogen phosphate is more preferred. The lower limit of the content of the phosphorous compound in the layer (A) is preferably 1 ppm, more preferably 10 ppm, still more preferably 20 ppm, and particularly preferably 30 ppm. The upper limit of the content of the phosphorous compound in the layer (A) is preferably 200 ppm, more preferably 150 ppm, and still more preferably 100 ppm. When the content of the phosphorous compound is more than or equal to the lower limit or is less than or equal to the upper limit, the thermal stability may be improved, and generation of gelatinous aggregates, coloring, and the like are less likely to occur during melt molding over a long period of time.

The metal ion may be exemplified by a monovalent metal ion, a divalent metal ion, and another transition metal ion, and these may consist of one type, or a plurality of types. Of these, the monovalent metal ion or the divalent metal ion is preferred. As the monovalent metal ion, an alkali metal ion is preferred, and examples thereof include ions of lithium, sodium, potassium, rubidium, and cesium; in light of industrial availability, an ion of sodium or potassium is preferred. Furthermore, examples of an alkali metal salt which gives the alkali metal ion include aliphatic carboxylates, aromatic carboxylates, carbonates, hydrochlorides, nitrates, sulfates, phosphates, and metal complexes. Of these, in light of availability, the aliphatic carboxylates or the phosphates are preferred, and specifically, sodium acetate, potassium acetate, sodium phosphate, or potassium phosphate is preferred. There exists a case in which containing the divalent metal ion as the metal ion is preferred. When the metal ion contains the divalent metal ion, for example, heat deterioration of the EVOH during recovering and reusing trim may be inhibited, and generation of gels and aggregates of the multilayer film to be obtained may be inhibited. Examples of the divalent metal ion include ions of beryllium, magnesium, calcium, strontium, barium, and zinc; in light of industrial availability, an ion of magnesium, calcium, or zinc is preferred. Furthermore, examples of a divalent metal salt which gives the divalent metal ion include carboxylates, carbonates, hydrochlorides, nitrates, sulfates, phosphates, and metal complexes; and the carboxylates are preferred. A carboxylic acid which constitutes the carboxylate is preferably a carboxylic acid having 1 to 30 carbon atoms, and specific examples thereof include acetic acid, propionic acid, butyric acid, stearic acid, lauric acid, montanic acid, behenic acid, octylic acid, sebacic acid, ricinoleic acid, myristic acid, palmitic acid, and the like, and of these, acetic acid or stearic acid is preferred. The lower limit of the content of the metal ion in the layer (A) is preferably 1 ppm, more preferably 100 ppm, and still more preferably 150 ppm. On the other hand, the upper limit of the content of the metal ion is preferably 1,000 ppm, more preferably 400 ppm, and still more preferably 350 ppm. When the content of the metal ion in the layer (A) is 1 ppm or more, the interlayer adhesiveness of the multilayer film of the present invention tends to be favorable. On the other hand, when the content of the metal ion is 1,000 ppm or less, coloring resistance tends to be favorable.

Examples of the antioxidant include 2,5-di-t-butylhydroquinone, 2,6-di-t-butyl-p-cresol, 4,4'-thiobis(6-t-butylphenol), 2,2'-methylene-bis(4-methyl-6-t-butylphenol), octadecyl-3-(3',5'-di-t-butyl-4'-hydroxyphenyl)propionate, and the like.

Examples of the ultraviolet ray-absorbing agent include ethylene-2-cyano-3,3'-diphenyl acrylate, 2-(2'-hydroxy-5'-methylphenyl)benzotriazole, 2-(2'-hydroxy-3'-t-butyl-5'-methylphenyl)-5-chlorobenzotriazole, 2-hydroxy-4-methoxybenzophenone, 2,2'-dihydroxy-4-methoxybenzophenone, 2-hydroxy-4-octoxybenzophenone, and the like.

Examples of the plasticizer include dimethyl phthalate, diethyl phthalate, dioctyl phthalate, waxes, liquid paraffin, phosphoric acid esters, and the like.

Examples of the antistatic agent include pentaerythritol monostearate, sorbitan monopalmitate, sulfated polyolefins, polyethylene oxides, polyethylene glycol (product name: Carbowax), and the like.

Examples of the lubricant include ethylenebis(stearamide), butyl stearate, and the like.

Examples of the colorant include carbon black, phthalocyanine, quinacridone, indoline, azo pigments, bengara, and the like.

Examples of the filler include glass fiber, wollastonite, calcium silicate, talc, montmorillonite, and the like.

Examples of the thermal stabilizer include hindered phenol compounds, hindered amine compounds, and the like.

Examples of the resin other than the EVOH include polyamide, polyolefin, and the like.

Examples of the metal salt of a higher aliphatic carboxylic acid include sodium stearate, potassium stearate, calcium stearate, magnesium stearate, and the like.

The total thickness (LA) of all the layers (A) of the multilayer film of the present invention is preferably 5 $\mu$m or more and less than 50 $\mu$m, more preferably 10 $\mu$m or more and 45 $\mu$m or less, and still more preferably 12 $\mu$m or more and 35 $\mu$m or less. The total thickness (LA) of the layers (A) may be 25 $\mu$m or less, or may be 15 $\mu$m or less. Furthermore, the thickness of the layer (A) as one layer is preferably 5 $\mu$m or more and less than 50 $\mu$m, more preferably 8 $\mu$m or more and 40 $\mu$m or less, and still more preferably 10 $\mu$m or more and 28 $\mu$m or less. The thickness of the layer (A) as one layer may be 20 $\mu$m or less, or 15 $\mu$m or less. When the total thickness (LA) of the layers (A) or the thickness of the layer (A) as one layer is more than or equal to the lower limit, the gas barrier properties of the multilayer film can be more improved, and more appropriate flexibility (sufficient hardness) can be provided. On the other hand, when the total thickness (LA) of the layers (A) or the thickness of the layer (A) as one layer is less than the upper limit, the bending resistance and the flexibility of the multilayer film can be more enhanced.

The proportion of the total thickness of all the layers (A) included in the multilayer film of the present invention to the total thickness of all the layers of the multilayer film is preferably less than 10%, more preferably less than 8%, and still more preferably less than 6%. When the proportion of the total thickness of all the layers (A) included in the multilayer film to the total thickness of all the layers of the multilayer film is less than the upper limit, the bending resistance of the multilayer film may be more favorable and the flexibility thereof may be also more appropriate, by virtue of an increase in the proportion of the total thickness of the layers (B), and the like. Furthermore, partly owing to use, in the layer (A), of the EVOH that has a small ethylene unit content, the multilayer film can achieve favorable gas barrier properties and appropriate flexibility (sufficient hardness) even when the proportion of the total thickness of the layers (A) is relatively small in this manner. On the other hand, the proportion of the total thickness of all the layers (A) included in the multilayer film to the total thickness of all the layers of the multilayer film is preferably 1% or more, more preferably 2% or more, and still more preferably 3% or more. When the proportion of the total thickness of all the layers (A) included in the multilayer film to the total thickness of all the layers of the multilayer film is more than or equal to the lower limit, the gas barrier properties of the multilayer film can be improved, and the flexibility thereof can be made more appropriate.

The number of the layers (A) in the multilayer film of the present invention is not particularly limited, and may be one, or two or more. The upper limit of the number of the layers (A) in the multilayer film may be, e.g., ten, five, three, two, or one.

The layer (A) may be an unstretched layer or may be a stretched layer. In the case in which the layer (A) is a stretched layer, the layer (A) may be uniaxially stretched, or may be biaxially stretched. In the case of the layer (A) thus stretched, other layer(s) such as the layer (B) may be stretched or may not be stretched. The layer (A) is preferably a layer at least uniaxially stretched, and is more preferably at least uniaxially stretched by two times or more, still more preferably at least uniaxially stretched by two times or more and less than twelve times, yet more preferably biaxially stretched, and particularly preferably biaxially stretched each by three times or more and less than twelve times. In the case in which the layer (A) is a layer thus stretched, the gas barrier properties can be more improved. For example, in the case in which the layer (A) is at least uniaxially stretched (more preferably, in the case in which the layer (A) is biaxially stretched), and the ethylene unit content of the EVOH contained in the layer (A) is 18 mol% or more and 32 mol% or less, particularly high gas barrier properties can be achieved.

Layer B

The layer B is a layer containing, as a principal component, the thermoplastic resin other than the EVOH. It is to be noted that hereinafter, the "thermoplastic resin" as referred to means a thermoplastic resin other than the EVOH. Examples of the thermoplastic resin include: polyolefin resins such as a linear low-density polyethylene, a low-density polyethylene, a medium-density polyethylene, a high-density polyethylene, an ethylene-vinyl acetate copolymer, an ethylene-propylene copolymer, a polypropylene, a propylene-$\alpha$-olefin ($\alpha$-olefin having 4 to 20 carbon atoms) copolymer, a polybutene, and a polypentene; polyesters such as polyethylene terephthalate; polyester elastomers; polyamides such as nylon-6 and nylon-66; polystyrenes; polyvinyl chloride; polyvinylidene chloride; acrylic resins; vinyl ester resins; polyurethane elastomers; polycarbonates; chlorinated polyethylenes; chlorinated polypropylenes; and the like.

As the thermoplastic resin, a polyolefin resin is preferred, and a polyethylene resin is more preferred. The polyolefin resin as referred to means a resin that includes, in its structural units, a structural unit (olefin unit) derived from olefin. The polyethylene resin as referred to means a resin that includes, in its structural units, a structural unit (ethylene unit) derived from ethylene. The lower limit of the content of the olefin unit in total structural units in the polyolefin resin is, e.g., preferably 50 mol%, and more preferably 70 mol%, and may be 90 mol%, 95 mol%, 98 mol%, or 99 mol%. The upper limit of the content of the olefin unit in total structural units in the polyolefin resin may be 100 mol%. The lower limit of the content of the ethylene unit in total structural units in the polyethylene resin is, e.g., preferably 50 mol%, and more preferably 70 mol%, and may be 90 mol%, 95 mol%, 98 mol%, or 99 mol%. The upper limit of the content of the ethylene unit in total structural units in the polyethylene resin may be 100 mol%. When the polyolefin resin, especially, the polyethylene resin is used as the thermoplastic resin, it is possible to, e.g., more improve the bending resistance of the multilayer film of the present invention, and make the flexibility thereof more appropriate.

The thermoplastic resin may be an adhesive resin (a thermoplastic resin having adhesiveness). It is to be noted that of the layers (B), a layer containing an adhesive resin as the thermoplastic resin may be referred to as an adhesive resin layer, or may be referred to as a layer ($B_{AD}$). The thermoplastic resin having adhesiveness is exemplified by an acid-modified polyolefin, an epoxy-modified polyolefin, and the like; an acid-modified polyolefin is preferred, a carboxylic acid-modified polyolefin is more preferred, and a carboxylic acid-modified polyethylene is still more preferred. The carboxylic acid-modified polyolefin is one mode of the polyolefin resin. Furthermore, the carboxylic acid-modified polyethylene is one mode of the polyethylene resin. The carboxylic acid-modified polyolefin may be a polyolefin resin having a carboxy group or an anhydride group thereof. The polyolefin resin having a carboxy group or an anhydride group thereof can be obtained, for example, by chemically bonding an ethylenic unsaturated carboxylic acid or an anhydride thereof to an unmodified polyolefin resin by an addition reaction, a graft reaction, or the like.

Examples of the unmodified polyolefin resin to be used for producing the carboxylic acid-modified polyolefin include the above-described various types of polyolefin resins; and a polyethylene, an ethylene-vinyl acetate copolymer, or an ethylene-ethyl acrylate copolymer is preferred.

Examples of the ethylenic unsaturated carboxylic acid and the anhydride thereof include monocarboxylic acids, monocarboxylic acid esters, dicarboxylic acids, dicarboxylic acid monoesters, dicarboxylic acid diesters, anhydrides of dicarboxylic acids, and the like. Specific examples of the ethylenic unsaturated carboxylic acid and the anhydride thereof include maleic acid, fumaric acid, itaconic acid, maleic anhydride, itaconic anhydride, maleic acid monomethyl ester, maleic acid monoethyl ester, maleic acid diethyl ester, fumaric acid monomethyl ester, and the like. Of these, anhydrides of dicarboxylic acid such as maleic anhydride and itaconic anhydride are preferred, and maleic anhydride is more preferred.

The carboxylic acid-modified polyolefin is obtained by, for example, introducing an ethylenic unsaturated carboxylic acid or an anhydride thereof into an unmodified polyolefin resin by an addition reaction or a graft reaction in the presence of a solvent such as xylene and a catalyst such as a peroxide. In the reaction, the lower limit of the addition amount or grafting amount (modification degree) of the carboxylic acid or the anhydride thereof added to or grafted on the unmodified polyolefin resin is, with respect to the unmodified polyolefin resin, preferably 0.01% by mass, and more preferably 0.02% by mass. On the other hand, the upper limit of the addition amount or the grafting amount (modification degree) is, with respect to the unmodified polyolefin resin, preferably 15% by mass, and more preferably 10% by mass.

The thermoplastic resin may be used alone of one type, or in a combination of two or more types. For example, the layer (B) as one layer may contain two or more types of the thermoplastic resin. Furthermore, in the case in which two or more layers (B) are present, different thermoplastic resins may be used for the respective layers (B). The content of the thermoplastic resin(s) in the layer (B) is preferably 70% by mass or more, more preferably 80% by mass or more, and particularly preferably 90% by mass or more, and may be 95% by mass or more, 99% by mass or more, or 99.9% by mass or more. A resin that constitutes the layer (B) may be constituted from substantially only the thermoplastic resin(s). On the other hand, the content of the thermoplastic resin(s) in the layer (B) may be, e.g., 99.9% by mass or less, or 99% by mass or less.

The layer (B) may contain, as an optional component other than the thermoplastic resin, an antioxidant; an ultraviolet ray-absorbing agent; a plasticizer; an antistatic agent; a lubricant; a colorant; a filler; a thermal stabilizer; a resin other than the thermoplastic resin; and the like. The layer (B) may contain two or more types of these optional components.

The total thickness (LB) of all the layers (B) included in the multilayer film of the present invention is preferably 100 $\mu$m or more and less than 500 $\mu$m, more preferably 200 $\mu$m or more and 400 $\mu$m or less, and still more preferably 250 $\mu$m or more and 350 $\mu$m or less. When the total thickness (LB) of the layers (B) is more than or equal to the lower limit, the bending resistance of the multilayer film can be more improved, and the flexibility thereof can be made more appropriate. On the other hand, when the total thickness (LB) of the layers (B) is less than the upper limit, it is possible to, e.g., design the multilayer film to be thinner.

The thickness of the layer (B) as one layer is not particularly limited. For example, in the case in which the layer (B) is an adhesive resin layer (layer ($B_{AD}$)), the average thickness of this one layer is, for example, preferably 1 $\mu$m or more and 30 $\mu$m or less, more preferably 3 $\mu$m or more and 20 $\mu$m or less, and still more preferably 5 $\mu$m or more and 15 $\mu$m or less. In the case in which the layer (B) is a layer other than the adhesive resin layer, the average thickness of this one layer is preferably 30 $\mu$m or more and 300 $\mu$m or less, and more preferably 50 $\mu$m or more and 250 $\mu$m or less. Furthermore, the thickness of the layer (B) can be made more suitable according to, e.g., an arrangement position of the layer (B), as described later.

The proportion of the total thickness of all the layers (B) included in the multilayer film of the present invention to the total thickness of all the layers of the multilayer film is preferably more than 90% and 99% or less, more preferably more than 92% and 99% or less, and still more preferably more than 94% and 98% or less. When the proportion of the total thickness of all the layers (B) included in the multilayer film to the total thickness of all the layers of the multilayer film is more than the lower limit, the bending resistance of the multilayer film can be more favorable, and the flexibility thereof can be also more appropriate. Furthermore, in the multilayer film, due to, for example, the layer (A) containing the EVOH that has a small ethylene unit content, it is possible to exhibit favorable gas barrier properties and appropriate flexibility (sufficient hardness) even when the proportion of the total thickness of the layers (B) is thus relatively high. Furthermore, when the proportion of the total thickness of all the layers (B) included in the multilayer film to the total thickness of all the layers of the multilayer film is less than or equal to the upper limit, the layer (A) having a sufficient thickness can be provided, the gas barrier properties of the multilayer film can be improved, and the flexibility thereof can be made more appropriate.

The number of the layers (B) in the multilayer film of the present invention is not particularly limited, and may be one, or two or more. The lower limit of the number of the layers (B) in the multilayer film is preferably two, and more preferably four. The upper limit of the number of the layers (B) in the multilayer film may be, e.g., twenty, ten, eight, six, or four.

Other layer(s)

The multilayer film of the present invention may include other layer(s) aside from the layer(s) (A) and the layer(s) (B). Examples of the other layer(s) include a metal layer, a paper layer, an inorganic vapor-deposited layer, a layer that contains, as a principal component, a resin other than the thermoplastic resin, and the like. However, the proportion of the total thickness of all the layer(s) (A) and layer(s) (B) included in the multilayer film to the total thickness of all the layers of the multilayer film is 90% or more, preferably 95% or more, more preferably 98% or more, and still more preferably 99% or more. When the proportion of the total thickness of all the layer(s) (A) and layer(s) (B) included in the multilayer film to the total thickness of all the layers of the multilayer film is more than or equal to the lower limit, the effects of being favorable in gas barrier properties and bending resistance, and having appropriate flexibility, based on the above-described inequalities (1) to (3) can be sufficiently exhibited. For such a reason, it is preferred that the multilayer film consists of only the at least one layer (A) and the at least one layer (B). In other words, it is preferred that the proportion of the total thickness of all the layer(s) (A) and layer(s) (B) included in the multilayer film to the total thickness of all the layers of the multilayer film is 100%.

Layer Configuration and the like

The layer configuration of the multilayer film of the present invention is not particularly limited as long as the at least one layer (A) and the at least one layer (B) are present. It is preferred that in the multilayer film, the at least one layer (B) includes a layer (B1) placed as one surface layer, and a layer (B2) placed as another surface layer. When the layer (B) is thus placed as both the surface layers, the layer (A), which is relatively thin and rigid, is protected or supported, the bending resistance may be enhanced, and the generation of a pinhole that accompanies, e.g., the bending, and the like may be prevented. In addition, it is preferred that the layer (B1) does not correspond to an adhesive resin layer, and the layer (B1) is laminated to the layer (A) via the layer $(B_{AD})$ as an adhesive resin layer. Similarly, it is preferred that the layer (B2) does not correspond to an adhesive resin layer, and the layer (B2) is laminated to the layer (A) via the layer $(B_{AD})$ as an adhesive resin layer. Examples of the multilayer film in such a mode include multilayer films having layer configurations (1) to (4) exemplified below. Of these, the multilayer film having the layer configuration (1) described below is preferred. The layer (B1) and the layer (B2) may each be an adhesive resin layer. It is to be noted that in each layer configuration exemplified below, "/" denotes direct lamination. Furthermore, the layer simply represented as "B" defines a layer (B) that does not correspond to an adhesive resin layer.

(1) $B1/B_{AD}/A/B_{AD}/B2$
(2) $B1/B_{AD}/A/B_{AD}/B/B_{AD}/A/B_AD/B2$
(3) $B1/B_{AD}/B/B_{AD}/B/B_{AD}/A/B_{AD}/B2$
(4) $B1/B_{AD}/B/B_{AD}/A/AB_{AD}/A/B_{AD}/B2$

In addition, a layer configuration in which the multilayer film includes the layer (B1) and the layer (B2) is also exemplified by the following (5) to (7), and the like.

(5) B1/A/B2
(6) $B1/B_{AD}/A/B2$
(7) $B1/B_{AD}/B/B_{AD}/A/B_{AD}/B2$

In the multilayer film of the present invention including the layer (B1) and the layer (B2), it is preferred that a thermoplastic resin as a principal component of the layer (B1) has a melting point that is lower than the melting point of a thermoplastic resin as a principal component of the layer (B2), and the layer (B1) has a thickness larger than that of the layer (B2). The multilayer film may be molded into, e.g., a bag shape by heat sealing, and used as a container. In this case, the heat sealing is performed such that the layer (B1) containing the thermoplastic resin having the lower melting point becomes the innermost layer to be subjected to the thermal adhesion. On the other hand, the layer (B2) as the outermost layer suitably contains the thermoplastic resin having the higher melting point, so that melting is less likely to occur during the heat sealing. When in such a container, the layer (B1) as the innermost layer is made thicker, the layer (A) having relatively low moisture resistance can be placed at a position far from the inner surface of the container. Such a container can be particularly suitably used as a container for containing contents including water. Particularly in the case in which the layer (A) contains an EVOH having a low ethylene unit content, the moisture resistance deteriorates, and thus, the moisture resistance-improving effect due to the increase in the thickness of the layer (B1) is remarkably generated.

The difference between the melting point of the thermoplastic resin as the principal component of the layer (B1) and the melting point of the thermoplastic resin as the principal component of the layer (B2) is preferably 3 °C or more and 30 °C or less, and more preferably 6 °C or more and 20 °C or less. Furthermore, the melting point of the thermoplastic resin as the principal component of the layer (B1) is preferably 90 °C or more and 110 °C or less, and more preferably 95 °C or more and 105 °C or less. The melting point of the thermoplastic resin as the principal component of the layer (B2) is preferably 100 °C or more and 120 °C or less, and more preferably 105 °C or more and 115 °C or less. The melting point of the thermoplastic resin may be a melting peak temperature obtained by a differential scanning calorimetric analysis.

The principal component of the layer (B1) is preferably a polyethylene resin, more preferably a polyethylene (such as a linear low-density polyethylene, a low-density polyethylene, a medium-density polyethylene, and a high-density polyethylene), and still more preferably the linear low-density polyethylene or the low-density polyethylene. The principal component of the layer (B2) is preferably a polyethylene resin, more preferably a polyethylene (such as a linear low-density polyethylene, a low-density polyethylene, a medium-density polyethylene, and a high-density polyethylene), and still more preferably the low-density polyethylene, the medium-density polyethylene, or the high-density polyethylene.

The thickness of the layer (B1) is preferably 100 µm or more and 300 µm or less, more preferably 150 µm or more and 280 µm or less, and still more preferably 200 µm or more and 260 µm or less. The thickness of the layer (B2) is preferably 10 µm or more and 200 µm or less, more preferably 20 µm or more and 100 µm or less, and still more preferably 40 µm or more and 80 µm or less.

In the case in which the layer (A) is one layer, similarly, in light of the moisture resistance, a thickness ratio (I/O) of the total thickness I of all the layers including the layer (B1) laminated to one face side of the layer (A) to the total thickness O of all the layers including the layer (B2) laminated to the other face side of the layer (A) is preferably 60/40 or more and 90/10 or less, and more preferably 70/30 or more and 85/15 or less.

In the multilayer film, it is also preferred that the layer (B) is present on both the faces of the layer (A). The layer configurations (1) to (7) exemplified above are included in the present mode. In addition, for example, a layer configuration in which the layer (A) is placed as at least one surface layer, such as configurations (8) to (11) exemplified below, is also one mode of the multilayer film of the present invention.

(8) A/B
(9) A/$B_{AD}$/B
(10) A/$B_{AD}$/B/$B_{AD}$/A
(11) A/$B_{AD}$/B/$B_{AD}$/A/$B_{AD}$/B

The total thickness of all the layers of the multilayer film of the present invention (i.e., the entire thickness) is not particularly limited. More specifically, the multilayer film is not limited to a multilayer film having a predetermined thickness or less. The total thickness of all the layers of the multilayer film is preferably 100 μm or more and 600 μm or less, more preferably 200 μm or more and 500 μm or less, still more preferably 250 μm or more and 400 μm or less, and particularly preferably 300 μm or more and 350 μm or less. When the total thickness of all the layers is more than or equal to the lower limit, the gas barrier properties, the bending resistance, and the like can be enhanced, and the flexibility can be made more appropriate. On the other hand, when the total thickness of all the layers is less than or equal to the upper limit, the flexibility and the like can be enhanced.

In the multilayer film of the present invention, an oxygen transmission rate (under a condition involving 20 °C and 65% RH), as measured in accordance with a method disclosed in JIS K 7126-2 (equal-pressure method; 2006), is preferably 10 cc/(m$^2$·day·atm) or less, more preferably 5.0 cc/(m$^2$·day·atm) or less, still more preferably 1.0 cc/(m$^2$·day·atm) or less, yet more preferably 0.5 cc/(m$^2$·day·atm) or less, and particularly preferably 0.2 cc/(m$^2$·day·atm) or less. When the oxygen transmission rate is less than or equal to the upper limit, the multilayer film can be particularly suitably used as various packaging materials and the like. On the other hand, the lower limit of the oxygen transmission rate may be 0.001 cc/(m$^2$·day·atm), or may be 0.01 cc/(m$^2$·day·atm).

A procedure for producing the multilayer film of the present invention is not particularly limited. Examples of the procedure include: a procedure in which a thermoplastic resin for constituting the layer (B) is melt-extruded on a monolayer film consisting of the layer (A); a procedure in which resins for constituting respective layers are coextruded; a procedure in which films that correspond to respective layers are laminated to each other with, e.g., an adhesive; and the like. The coextrusion process is not particularly limited, and a multimanifold-merging T die process, a feed block-merging T die process, an inflation process, and the like may be exemplified.

The multilayer film of the present invention may be a stretched film, or may be a film that has not been stretched (an unstretched film).

The multilayer film of the present invention is suitably used as a material for various packaging such as food packaging, medical drug packaging, industrial chemical packaging, pesticide packaging, various liquid agent packaging, etc., in other words, the multilayer film is suitably used as a packaging material. The multilayer film may be used for intended usages other than the packaging materials.

Packaging Material

A packaging material of the present invention includes the multilayer film of the present invention. The packaging material may be constituted by only the multilayer film of the present invention, or may be constituted by the multilayer film of the present invention and other member(s). For example, a packaging material formed by laminating the multilayer film of the present invention to another member (such as a substrate), and the like are also modes of the packaging material of the present invention. The packaging material may be used in the form of a film, or may be used in a state in which the packaging material is molded into a container shape (e.g., such as a pouch shape or a box shape). A container included in a reaction apparatus described later, and other containers are also modes of the packaging material. In a case in which the above-described multilayer film including the layer (B1) and the layer (B2) is molded into a container shape, it is preferred that the molding is performed such that the layer (B1) becomes the innermost layer and the layer (B2) becomes the outermost layer. Furthermore, a molding procedure in the case of molding into a container shape is not particularly limited, and various types of well-known molding procedures, other than the above-described heat sealing, can be adopted.

Reaction Apparatus

A reaction apparatus of the present invention includes a container made from the multilayer film of the present invention, and a stirring blade placed inside the container. A reaction apparatus of the present invention may include a container made from the packaging material of the present invention, and a stirring blade placed inside the container.

The container included in the reaction apparatus of the present invention can be molded by e.g., heat sealing or other various types of molding procedures by using the multilayer film of the present invention or the packaging material of the present invention. In the case in which the above-described multilayer film including the layer (B1) and the layer (B2) is used, it is preferred that the container is molded such that the layer (B1) becomes the innermost layer and the layer (B2) becomes the outermost layer. The container included in the reaction apparatus may be referred to as a reaction vessel. As the stirring blade to be included in the reaction apparatus, a conventionally well-known one may be used.

The container included in the reaction apparatus of the present invention is favorable in gas barrier properties and bending resistance, and has appropriate flexibility. Because the container has appropriate flexibility (in other words, has appropriate hardness), the container is less likely to deform even in the case in which the stirring blade is operated. In addition, because the bending resistance of the container is favorable, a pinhole or the like is less likely to be generated even in the case in which the container deforms. It is to be noted that when a pinhole or the like is generated, the gas barrier properties and the like may deteriorate at the portion. Therefore, in the reaction apparatus, even when the stirring blade continues to be operated, permeation of oxygen into the container from, e.g., the outside, and the like can be inhibited, and maintaining a predetermined reaction environment can be continued. In addition, because the container has appropriate flexibility and is not too hard, the container is superior also in the handleability. The reaction apparatus that has such advantages can be suitably used as a bioreactor. The bioreactor is an apparatus for performing a biochemical reaction with biocatalyst. The reaction apparatus may be used as a reaction apparatus other than the bioreactor.

EXAMPLES

Hereinafter, the present invention will be described in detail by way of Examples, but the present invention is not limited by these Examples.

Measurement of Melt Flow Rate (MFR)

The MFR of pellets of a dry resin composition obtained in each Synthesis Example was measured by the following method. The pellets of the dry resin composition were packed into a cylinder, which had an inner diameter of 9.55 mm and a length of 162 mm, of a melt indexer L 244 (manufactured by Takara Kogyo K. K.), and melted at 210 °C, and thereafter, a load was evenly applied to a melted EVOH by using a plunger having a mass of 2,160 g and a diameter of 9.48 mm. The amount (g/10 min) of the resin composition extruded per unit time from an orifice provided in the center of the cylinder and having a diameter of 2.1 mm was measured, and the amount was defined as the MFR.

Synthesis Example 1: Synthesis of EVOH-1

Into a 100 L pressurized reaction vessel equipped with a jacket, a stirrer, a nitrogen feed port, an ethylene feed port, and an initiator addition port, 40.0 kg of vinyl acetate (hereinafter, may be referred to as VAc) and 9.8 kg of methanol (hereinafter, may be referred to as MeOH) were charged, and an interior of the reaction vessel was replaced with nitrogen by bubbling nitrogen for 30 min. Next, the temperature in the reaction vessel was adjusted to 60 °C, and thereafter, ethylene was introduced such that a reaction vessel pressure (ethylene pressure) became 2.80 MPa, and polymerization was started by adding, as an initiator, 8.8 g of 2,2'-azobis(2,4-dimethylvaleronitrile) ("V-65", manufactured by FUJIFILM Wako Pure Chemical Corporation). During the polymerization, the ethylene pressure was maintained at 2.80 MPa, and the polymerization temperature was maintained at 60 °C. Four hrs later when a rate of conversion of VAc (a rate of polymerization with respect to VAc) became 49.8%, the polymerization was stopped by cooling along with charging into the container, a solution prepared by dissolving 0.2 g of copper acetate in 20 kg of methanol. The reaction vessel was opened to allow for elimination of ethylene, and thereafter the nitrogen gas was bubbled to complete the elimination of ethylene. Subsequently, the polymerization liquid was taken out from the container, and diluted with 20 L of MeOH. The liquid was fed from a tower top of a tower-shaped container, and vapor of MeOH was fed from a tower bottom, so that unreacted monomers that remained in the polymerization liquid were eliminated together with the MeOH vapor to give a solution of an ethylene-vinyl acetate copolymer (hereinafter, may be referred to as "EVAc") in MeOH. Next, into a 300 L reaction vessel equipped with a jacket, a stirrer, a nitrogen feed port, a reflux condenser, and a solution addition port, 100 kg of a 20% by mass solution of EVAc in MeOH was charged. While nitrogen gas was blown into this solution, the temperature of the solution was elevated to 60 °C, and a solution of sodium hydroxide having a concentration of 2 N in MeOH was added to the solution at a rate of 300 mL/min for 2 hrs. After completion of the addition of the solution of sodium hydroxide in MeOH, a saponification reaction was allowed to proceed, with stirring of the mixture for 2 hrs while an internal temperature of the system was maintained at 60 °C, and MeOH and methyl acetate generated by the saponification reaction were flowed outside the reaction vessel. Subsequently, 8.7 kg of acetic acid was added to the mixture, whereby the saponification reaction was stopped. Thereafter, with heating and stirring at 80 °C, 120 L of ion exchanged water was added thereto, and MeOH was flowed outside the reaction vessel to permit precipitation of the EVOH. Thus precipitated EVOH was collected by decantation, and was ground by a grinder. The EVOH powder thus obtained was charged into a 1 g/L aqueous acetic acid solution (bath ratio 20: a ratio of 20 L of the aqueous solution with respect to 1 kg of the powder) and washed with stirring for 2 hrs. The EVOH powder was deliquored and further, charged into a 1 g/L aqueous acetic acid solution (bath ratio 20) and washed with stirring for 2 hrs. Purification was conducted by repeating three times, an operation of: charging the EVOH powder into ion exchanged water (bath ratio 20); washing with stirring for 2 hrs; and carrying out deliquoring. An electric conductivity of the washing liquid was 3 $\mu$S/cm (measured with "CM-30ET", available from Toa Electronics Ltd.). Next, the purified EVOH powder was subjected to immersion with stirring in 250 L of an aqueous solution containing 0.5 g/L acetic acid and 0.1 g/L sodium acetate for 4 hrs, and then deliquored. Drying of the powder at 60 °C for 16 hrs gave 16.1 kg of crude dry matter of the EVOH. The above operation was performed again to give 15.9 kg of crude dry matter of the EVOH, so that in total, 32.0 kg of the crude dry matter of the EVOH (EVOH-1) was obtained.

Into 94.5 L of an aqueous solution obtained by dissolving each component in water so as to adjust acetic acid of 0.364 g/L and sodium acetate of 0.455 g/L, 10.5 kg of the obtained crude dry matter of the EVOH (EVOH-1) was charged, and subjected to immersion at 25 °C for 6 hrs while being stirred at intervals. After the immersion, the water-containing EVOH pellets were dehydrated by centrifugal liquid removal, and subsequently dried at 80 °C for 3 hrs and then at 120 °C for 24 hrs in a hot-air dryer. Consequently, pellets (EVOH-1) of a dry EVOH resin composition, which was a mixture of the EVOH and the metal salt, were obtained. It is to be noted that with respect to the EVOH-1, analyses of a vinyl alcohol unit content, an ethylene unit content, and the degree of saponification by nuclear magnetic resonance (NMR) showed that the vinyl alcohol unit content was 76 mol%, the ethylene unit content (Et) was 24 mol%, and the degree of saponification was 99.98 mol% or more. Furthermore, the MFR of the EVOH-1 was 2.2 g/10 min.

Synthesis Example 2: Synthesis of EVOH-2

Pellets of a dry EVOH resin composition containing an EVOH (EVOH-2) were obtained similarly to Synthesis Example 1, except that the addition amounts of materials used for polymerization of the EVOH, the polymerization conditions, the charged amount in the saponification treatment, and the addition rate of a solution of 2 N of sodium hydroxide in MeOH were changed. With respect to the EVOH-2, analyses of the vinyl alcohol unit content, the ethylene unit content, and the degree of saponification by nuclear magnetic resonance (NMR) showed that the vinyl alcohol unit content was 68 mol%, the ethylene unit content (Et) was 32 mol%, and the degree of saponification was 99.98 mol% or more. Furthermore, the MFR of the EVOH-2 was 2.9 g/10 min.

Synthesis Example 3: Synthesis of EVOH-3

Pellets of a dry EVOH resin composition containing an EVOH (EVOH-3) were obtained similarly to Synthesis Example 1, except that the addition amounts of materials used for polymerization of the EVOH, the polymerization conditions, the charged amount in the saponification treatment, and the addition rate of a solution of 2 N of sodium hydroxide in MeOH were changed. With respect to the EVOH-3, analyses of the vinyl alcohol unit content, the ethylene unit content, and the degree of saponification by nuclear magnetic resonance (NMR) showed that the vinyl alcohol unit content was 62 mol%, the ethylene unit content (Et) was 38 mol%, and the degree of saponification was 99.98 mol% or more. Furthermore, the MFR of the EVOH-3 was 3.8 g/10 min.

Example 1

Production of Unstretched Multilayer Film

By using the pellets (EVOH-1) of the dry EVOH resin composition obtained in Synthesis Example 1;

a polyethylene resin-1 ("NOVATECH (registered trademark) LD LC600A", manufactured by Japan Polyethylene Corporation; a low-density polyethylene, melting point of 107 °C);
a polyethylene resin-2 ("Evolue (registered trademark) SP0510", manufactured by Prime Polymer Co., Ltd.; a linear low-density polyethylene, melting point of 96 °C); and
a polyethylene adhesive resin ("ADMER (registered trademark) NF518", manufactured by Mitsui Chemicals, Inc.; a linear low-density polyethylene adhesive resin graft-modified with maleic anhydride, melting point of 120 °C),
an unstretched multilayer film having an asymmetrical configuration and including five layers each selected from three types (polyethylene resin-1/ polyethylene adhesive resin/ EVOH-1/ polyethylene adhesive resin/ polyethylene resin-2 = 60 $\mu$m/ 8 $\mu$m/ 12 $\mu$m/ 8 $\mu$m/ 240 $\mu$m) was produced. It is to be noted that the proportion of the thickness (12 $\mu$m) of the layer (A) (EVOH-1) to the total thickness (328 $\mu$m) of all the layers was approximately 3.7%. The thickness of the multilayer film (coextruded film) was adjusted by appropriately changing the screw rotation speed and the roll drawing speed. Furthermore, the thickness of each layer was measured by a method described below.

The extruder, the extrusion conditions, and the die used were as follows:

EVOH-1

extruder: single screw extruder (Toyo Seiki Seisaku-sho, Ltd.; laboratory extruder, ME model CO-EXT)
screw: diameter of 20 mmφ; L/D of 20; full flight screw
extrusion temperature: feeding zone/ compression zone/ metering zone/ die = 175 °C/ 210 °C/ 220 °C/ 220 °C
polyethylene adhesive resin
extruder: single screw extruder (TECHNOVEL CORPORATION; SZW20GT-20MG-STD)
screw: diameter of 20 mmφ; L/D of 20; full flight screw
extrusion temperature: feeding zone/ compression zone/ metering zone/ die = 175 °C/ 200 °C/ 220 °C/ 220 °C
polyethylene resins-1 and -2
extruder: single screw extruder (Research Laboratory of Plastics Technology Co., Ltd.; GT-32-A)
screw: diameter of 32 mmφ; L/D of 28; full flight screw
extrusion temperature: feeding zone/ compression zone/ metering zone/ die = 175 °C/ 200 °C/ 220 °C/ 220 °C
die: coat hanger die having a width of 300 mm for three layers each selected from three types (manufactured by Research Laboratory of Plastics Technology Co., Ltd.)
die temperature: 220 °C

Example 2

A multilayer film was obtained by a procedure similar to that of Example 1, except that in the production procedure of Example 1 a thermoplastic elastomer resin ("Pebax 5533", manufactured by Arkema S.A.; melting point of 159 °C) was used in place of the polyethylene resins-1 and -2.

Example 3

An unstretched multilayer film having an asymmetrical configuration and including five layers each selected from three types (polypropylene resin/ polypropylene adhesive resin/ EVOH-1/ polypropylene adhesive resin/ polypropylene resin = 60 μm/ 8 μm/ 12 μm/ 8 μm/ 240 μm) was obtained by a procedure similar to that of Example 1, except that in the production procedure of Example 1: a polypropylene resin ("NOVATECH (registered trademark) PP EA7AD", manufactured by Japan Polypropylene Corporation; a polypropylene, melting point of 164 °C) was used in place of the polyethylene resins-1 and -2; and a polypropylene adhesive resin (manufactured by Mitsui Chemicals, Inc.) "ADMER (registered trademark) QF500" was used in place of the polyethylene adhesive resin.

Example 4

Production of Biaxially Stretched Film

A monolayer film was produced from the pellets (EVOH-2) of the dry EVOH resin composition obtained in Synthesis Example 2. This monolayer film was brought into contact with hot water at 80 °C for 10 sec, and stretched in a 90 °C atmosphere with a Tenter-type simultaneous biaxial stretching machine by 3.0 times in a machine direction and by 3.0 times in a crosswise direction. In addition, a heat treatment was carried out in the tenter at a preset temperature of 170 °C for 5 sec, and the film end was cut away to give a biaxially stretched film (thickness of 12 μm; width of 50 cm).

Production of Multilayer Film by Lamination

A double layer film A was obtained by providing a layer of a polyethylene adhesive resin ("ADMER (registered trademark) NF518", manufactured by Mitsui Chemicals, Inc.) on one face of a monolayer film of the polyethylene resin-1 ("NOVATECH (registered trademark) LD LC600A", manufactured by Japan Polyethylene Corporation). Furthermore, a double layer film B was obtained by providing a layer of a polyethylene adhesive resin ("ADMER (registered trademark) NF518", manufactured by Mitsui Chemicals, Inc.) on one face of a monolayer film of the polyethylene resin-2 ("Evolue (registered trademark) SP0510", manufactured by Prime Polymer Co., Ltd.). A two-component adhesive ("TAKELAC (registered trademark) A-520" and "TAKENATE (registered trademark) A-50", manufactured by Mitsui Chemicals, Inc.) was applied on the face, on the adhesive resin layer side, of each of the double layer film A and the double layer film B and dried so that the dry thickness became 2 $\mu$m. The double layer film A and the double layer film B were laminated to both the faces of the obtained biaxially stretched film of the EVOH-2, so that a multilayer film (polyethylene resin-1/ polyethylene adhesive resin/ adhesive/ EVOH-2/ adhesive/ polyethylene adhesive resin/ polyethylene resin-2 = 60 $\mu$m/ 8 $\mu$m/ 2 $\mu$m/ 12 $\mu$m/ 2 $\mu$m/ 8 $\mu$m/ 240 $\mu$m) was obtained.

Example 5

Production of Uniaxially Stretched Film

A monolayer film was produced from the pellets (EVOH-2) of the dry EVOH resin composition obtained in Synthesis Example 2. This monolayer film was brought into contact with hot water at 80 °C for 10 sec, and stretched in a 90 °C atmosphere with a Tenter-type uniaxial stretching machine by 6.0 times in a machine direction. Furthermore, a heat treatment was carried out in the tenter at a preset temperature of 170 °C for 5 sec, and the film end was cut away to give a uniaxially stretched film (thickness of 12 $\mu$m; width of 50 cm).

Production of Multilayer Film by Lamination

Except that in the production procedure of Example 4, the obtained uniaxially stretched film was used in place of the biaxially stretched film, a multilayer film (polyethylene resin-1/ polyethylene adhesive resin/ adhesive/ EVOH-2/ adhesive/ polyethylene adhesive resin/ polyethylene resin-2 = 60 $\mu$m/ 8 $\mu$m/ 2 $\mu$m/ 12 $\mu$m/ 2 $\mu$m/ 8 $\mu$m/ 240 $\mu$m) was obtained similarly to Example 4.

Example 6

Production of EVOH-4

62.5 parts by mass of the EVOH-1 and 37.5 parts by mass of the EVOH-2 were melt-kneaded with a twin screw extruder (L/D = 30; screw diameter of $\varphi$ 25 mm) at a cylinder temperature of 230 °C and a screw rotation speed of 100 rpm. A strand which came out from the die was cooled in a water bath, and cut into a pellet shape with a strand cutter to produce an EVOH-4. The EVOH-4 had an ethylene unit content (Et) of 27 mol%, and a degree of saponification of 99.98 mol% or more. Furthermore, the MFR of the EVOH-4 was 2.5 g/10 min.

Production of Unstretched Multilayer Film

A multilayer film was produced by a procedure similar to that of Example 1, except that in the production procedure of Example 1, the EVOH-4 was used in place of the EVOH-1, so that an unstretched multilayer film (polyethylene resin-1/ polyethylene adhesive resin/ EVOH-4/ polyethylene adhesive resin/ polyethylene resin-2 = 60 $\mu$m/ 8 $\mu$m/ 12 $\mu$m/ 8 $\mu$m/ 240 $\mu$m) was obtained.

Comparative Example 1

A multilayer film was produced by a procedure similar to that of Example 1, except that in the production procedure of Example 1, the EVOH-3 was used in place of the EVOH-1.

Comparative Example 2

A multilayer film was obtained by a procedure similar to that of Example 1, except that in the production procedure of Example 1, the EVOH-3 was used in place of the EVOH-1, and the thickness of each layer was changed to polyethylene resin-1/ polyethylene adhesive resin layer/ EVOH-3/ polyethylene adhesive resin layer/ polyethylene resin-2 = 60 $\mu$m/ 8 $\mu$m/ 64 $\mu$m/ 8 $\mu$m/ 240 $\mu$m.

Comparative Example 3

A multilayer film was obtained by a procedure similar to that of Example 1, except that in the production procedure of Example 1, the thickness of each layer was changed to polyethylene resin-1/ polyethylene adhesive resin layer/ EVOH-1/ polyethylene adhesive resin layer/ polyethylene resin-2 = 60 $\mu$m/ 8 $\mu$m/ 4 $\mu$m/ 8 $\mu$m/ 240 $\mu$m.

Comparative Example 4

A multilayer film was obtained by a procedure similar to that of Example 1, except that in the production procedure of Example 1, EVAL (registered trademark) "E171B" (manufactured by KURARAY CO., LTD.), which is an EVOH having an ethylene unit content (Et) of 44 mol%, was used in place of the EVOH-1, and the thickness of each layer was changed to polyethylene resin-1/ polyethylene adhesive resin layer/ EVOH-1/ polyethylene adhesive resin layer/ polyethylene resin-2 = 60 $\mu$m/ 8 $\mu$m/ 120 $\mu$m/ 8 $\mu$m/ 240 $\mu$m.

Comparative Example 5

Production of Filler-Containing EVOH-5

10 parts by mass of magnesium hydroxide (Kisuma (registered trademark) 5A) and 90 parts by mass of the EVOH-3 were melt-kneaded with a twin screw extruder (L/D = 30; screw diameter of $\varphi$ 25 mm) at a cylinder temperature of 230 °C and a screw rotation speed of 100 rpm. A strand which came out from the die was cooled in a water bath, and cut into a pellet shape with a strand cutter to produce an EVOH-5. The EVOH-5 had an ethylene unit content (Et) of 38 mol%, and a degree of saponification of 99.98 mol% or more. Furthermore, the MFR of the EVOH-5 was 3.5 g/10 min.

Production of Filler-Containing Polypropylene Resin PP-1

20 parts by mass of magnesium hydroxide (Kisuma (registered trademark) 5A) and 80 parts by mass of a polypropylene resin ("NOVATEC (registered trademark) PP EA7AD", manufactured by Japan Polypropylene Corporation; polypropylene, melting point of 164 °C) were melt-kneaded with a twin screw extruder (L/D = 30; screw diameter of $\varphi$ 25 mm) at a cylinder temperature of 230 °C and a screw rotation speed of 100 rpm. A strand which came out from the die was cooled in a water bath, and cut into a pellet shape with a strand cutter to produce a filler-containing polypropylene resin PP-1.

Production of Unstretched Multilayer Film

A multilayer film was obtained by a procedure similar to that of Example 3, except that in the production procedure of Example 3, the EVOH-5 was used in place of the EVOH-1, and the filler-containing polypropylene resin PP-1 was used in place of the polypropylene resin, and the thickness of each layer was changed to PP-1/ polypropylene adhesive resin/ EVOH-5/ polypropylene adhesive resin/ PP-1 = 60 $\mu$m/ 8 $\mu$m/ 40 $\mu$m/ 8 $\mu$m/ 240 $\mu$m).

Measurement of Thickness of Each Layer

The multilayer films obtained in the Examples and the Comparative Examples were cut with a microtome to expose cross sections. Thereafter, each cross section was measured with a backscattered electron detector of a scanning electron microscope ("ZEISS ULTRA 55", manufactured by SII Nano Technology, Inc.) at five different points of each layer to determine the thickness (average thickness) of each layer.

Measurement of Composite Elastic Modulus using Nanoindentation

With respect to the multilayer films obtained in the Examples and the Comparative Examples, a composite elastic modulus of each layer was measured using nanoindentation by the above-described method.
From the determined thickness and composite elastic modulus of each layer, a total thickness LA of the layer (A), a total thickness LB of the layer (B), an average composite elastic modulus EA of the layer (A), and an average composite elastic modulus EB of the layer (B) were determined. It is to be noted that in any of the Examples and Comparative Examples, the layer (A) was one layer. In addition, from these values and the ethylene content (Et) of the EVOH contained in each layer (A), LA/LB·1/Et and EA/EB were determined. Values of LA/LB·1/Et, EA, EB, EA/EB, and a proportion of a total thickness of the layer (A) and the layer (B) to a total thickness of all layers ($(LA + LB)/L_{ALL}$) are shown in Table 1.

Gas Barrier Property Evaluation: Measurement of Oxygen Transmission Rate (OTR)

The multilayer film obtained in each of the Examples and the Comparative Examples was attached to an oxygen transmission rate measurement device, and an oxygen transmission rate was measured by an equal-pressure method in accordance with JIS K 7126-2:2006. The measurement conditions are as follows.

device: MOCON OX-TRAN 2/21, manufactured by Mocon Modern Controls. Inc.; temperature of 20 °C
humidity on oxygen supply side: 65% RH
humidity on carrier gas side: 0% RH
carrier gas flow rate: 10 mL/min
oxygen pressure: 1.0 atm
Based on the oxygen transmission rate, the gas barrier property was evaluated according to the following criteria. In the cases of A to B, it was determined that the gas barrier property was favorable. The results are shown in Table 1.

Criteria

A: less than 0.2 cc/(m$^2$·day·atm)
B: 0.2 cc/(m$^2$·day·atm) or more and less than 0.5 cc/(m$^2$·day·atm)
C: 0.5 cc/(m$^2$·day·atm) or more and less than 1.0 cc/(m$^2$·day·atm)
D: 1.0 cc/(m$^2$·day·atm) or more and less than 5.0 cc/(m$^2$·day·atm)
E: 5.0 cc/(m$^2$·day·atm) or more

Bending Resistance Evaluation

The multilayer films obtained in the Examples and the Comparative Examples were subjected to moisture conditioning in an atmosphere at 23 °C and 50% RH, and then subjected to a bending process with a Gelbo flex tester (manufactured by Rigaku Kogyo Co., Ltd.). More specifically, first, the multilayer film was shaped into a circular cylinder having a diameter of 3.5 inches; both the ends thereof were held; and reciprocation consisting of repetition of an action that is application of a twist by an angle of 440 degrees in first 3.5 inches of a stroke with an initial holding interval being 7 inches and with a holding interval at the time of maximum bending being 1 inch, and then a straight horizontal motion in subsequent 2.5 inches was performed 500 to 5,000 times at a rate of 43 times/min. With respect to the multilayer film after the bending, bending resistance was evaluated according to the following criteria based on the number of the reciprocation until one or more pinholes opened. In the cases of A to C, it was determined that the bending resistance was favorable. The results are shown in Table 1.

Criteria

A: no pinhole opened even at 5,000 times
B: 4,500 times or more and less than 5,000 times
B⁻: 4,000 times or more and less than 4,500 times
C: 3,000 times or more and less than 4,000 times
D: 2,000 times or more and less than 3,000 times
E: less than 2,000 times

Flexibility Evaluation

After the multilayer films were subjected to moisture conditioning in an atmosphere at 23 °C and 50% RH, a puncture strength measurement was carried out with an AUTOGRAPH AGS-H (manufactured by Shimadzu Corporation) in accordance with ISO 1184. Based on the puncture strength when the puncturing needle moved 1.5 mm after the needle came into contact with the multilayer film, the flexibility was evaluated in accordance with the following criteria. In the cases of A to D, it was determined that the multilayer film had appropriate flexibility. More specifically, in the case of E1 (less than 0.2 N) or E2 (10.0 N or more), it was determined that the flexibility was not appropriate. The results are shown in Table 1.

Criteria

A: 1.3 N or more and less than 1.6 N
B1: 1.0 N or more and less than 1.3 N
B2: 1.6 N or more and less than 2.5 N

C1: 0.5 N or more and less than 1.0 N
C2: 2.5 N or more and less than 4.0 N
D1: 0.2 N or more and less than 0.5 N
D2: 4.0 N or more and less than 10.0 N
E1: less than 0.2 N
E2: 10.0 N or more

Table 1

| | Multilayer film | | | | | Evaluation | | |
|---|---|---|---|---|---|---|---|---|
| | LA/LB ·1/Et /mol%$^{-1}$ | EA /Gpa | EB /Gpa | EA/EB | (LA + LB)/L$_{ALL}$ /% | gas barrier property | bending resistance | flexibility |
| Example 1 | 0.0016 | 6.6 | 0.26 | 25.4 | 100.0 | A | B | A |
| Example 2 | 0.0016 | 6.6 | 0.17 | 38.8 | 100.0 | A | A | D1 |
| Example 3 | 0.0016 | 6.6 | 1.61 | 4.1 | 100.0 | A | B- | D2 |
| Example 4 | 0.0012 | 6.4 | 0.25 | 25.6 | 98.7 | B | A | A |
| Example 5 | 0.0012 | 6.2 | 0.26 | 23.8 | 98.7 | B | B- | B1 |
| Example 6 | 0.0014 | 6.1 | 0.26 | 23.5 | 100.0 | A | B | B1 |
| Comparative Example 1 | 0.0010 | 4.5 | 0.26 | 17.3 | 100.0 | D | A | B1 |
| Comparative Example 2 | 0.0053 | 4.5 | 0.26 | 17.3 | 100.0 | B | E | C2 |
| Comparative Example 3 | 0.0005 | 6.6 | 0.26 | 25.4 | 100.0 | C | A | C1 |
| Comparative Example 4 | 0.0086 | 3.1 | 0.26 | 11.9 | 100.0 | B | E | D2 |
| Comparative Example 5 | 0.0033 | 6.1 | 4.0 | 1.5 | 100.0 | B | E | E |

As shown in Table 1, the multilayer films of Examples 1 to 6, which each had LA/LB·1/Et of 0.0006 or more and 0.003 or less, EA of 6.0 or more, and EA/EB of 2 or more and 40 or less, were favorable in gas barrier properties and bending resistance, and had appropriate flexibility.

[INDUSTRIAL APPLICABILITY]

The multilayer film of the present invention is favorable in gas barrier properties and bending resistance, and has appropriate flexibility, and thus is also useful as packaging materials, and can be used as, e.g. a packaging material for a reaction apparatus.

**Claims**

1.  A multilayer film comprising:

    at least one layer (A) comprising an ethylene-vinyl alcohol copolymer as a principal component; and
    at least one layer (B) comprising, as a principal component, a thermoplastic resin other than the ethylene-vinyl alcohol copolymer, wherein
    a proportion of a total thickness of the at least one layer (A) and the at least one layer (B) to a total thickness of all layers is 90% or more, and
    the multilayer film satisfies following inequalities (1) to (3):

$$0.0006 \leqq \frac{LA}{LB} \cdot \frac{1}{Et} \leqq 0.003 \quad \cdots (1)$$

$$EA \geqq 6.0 \quad \cdots (2)$$

$$2 \leqq \frac{EA}{EB} \leqq 40 \quad \cdots (3)$$

wherein, in the inequalities (1) to (3): LA represents a total thickness of the at least one layer (A); LB represents a total thickness of the at least one layer (B); Et represents an ethylene unit content (mol%) in the ethylene-vinyl alcohol copolymer; EA represents an average composite elastic modulus (GPa) of the at least one layer (A); and EB represents an average composite elastic modulus (GPa) of the at least one layer (B).

2. The multilayer film according to claim 1, wherein the at least one layer (B) comprises a layer (B1) placed as one surface layer, and a layer (B2) placed as another surface layer.

3. The multilayer film according to claim 2, wherein

   a thermoplastic resin as a principal component of the layer (B1) has a melting point that is lower than a melting point of a thermoplastic resin as a principal component of the layer (B2), and
   the layer (B1) has a thickness larger than that of the layer (B2).

4. The multilayer film according to any one of claims 1 to 3, wherein the thermoplastic resin is a polyolefin resin.

5. The multilayer film according to any one of claims 1 to 3, wherein the thermoplastic resin is a polyethylene resin.

6. The multilayer film according to any one of claims 1 to 5, wherein

   the total thickness of the at least one layer (A) is 5 $\mu$m or more and less than 50 $\mu$m, and
   a proportion of the total thickness of the at least one layer (A) to the total thickness of all the layers is less than 10%.

7. The multilayer film according to any one of claims 1 to 6, wherein an oxygen transmission rate (under a condition involving 20 °C and 65% RH), measured in accordance with a method disclosed in JIS K 7126-2 (equal-pressure method; 2006), is 1.5 cc/(m$^2$·day·atm) or less.

8. The multilayer film according to any one of claims 1 to 7, wherein

   the ethylene unit content of the ethylene-vinyl alcohol copolymer is 18 mol% or more and less than 25 mol%, and
   a degree of saponification of the ethylene-vinyl alcohol copolymer is 90 mol% or more.

9. The multilayer film according to any one of claims 1 to 7, wherein

   the ethylene unit content of the ethylene-vinyl alcohol copolymer is 18 mol% or more and 32 mol% or less, and
   the at least one layer (A) is at least uniaxially stretched.

10. The multilayer film according to any one of claims 1 to 9, consisting of the at least one layer (A) and the at least one layer (B).

11. A packaging material comprising the multilayer film according to any one of claims 1 to 10.

12. A reaction apparatus comprising:

    a container made from the multilayer film according to any one of claims 1 to 10; and
    a stirring blade placed inside the container.

## INTERNATIONAL SEARCH REPORT

| International application No. |
|---|
| **PCT/JP2023/037870** |

| A. | CLASSIFICATION OF SUBJECT MATTER |
|---|---|

***B32B 27/28***(2006.01)i; ***B65D 65/40***(2006.01)i
FI:   B32B27/28 102; B65D65/40 D

According to International Patent Classification (IPC) or to both national classification and IPC

| B. | FIELDS SEARCHED |
|---|---|

Minimum documentation searched (classification system followed by classification symbols)

B32B27/28; B65D65/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/080458 A1 (KURARAY CO., LTD.) 21 April 2022 (2022-04-21) | 1-12 |
| A | WO 2007/129371 A1 (THE NIPPON SYNTHETIC CHEMICAL INDUSTRY CO., LTD.) 15 November 2007 (2007-11-15) | 1-12 |
| A | JP 2006-272569 A (KURARAY CO., LTD.) 12 October 2006 (2006-10-12) | 1-12 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 December 2023** | **09 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| WO | 2022/080458 | A1 | 21 April 2022 | US | 2023/0382089 | A1 | |
| | | | | CN | 116600994 | A | |
| WO | 2007/129371 | A1 | 15 November 2007 | US | 2009/0311524 | A1 | |
| | | | | EP | 2014462 | A1 | |
| | | | | CN | 101448639 | A | |
| JP | 2006-272569 | A | 12 October 2006 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- equal-pressure method. *JIS K 7126-2*, 2006

- *JIS K 7126-2:2006*